Europäisches Patentamt

(19) European Patent Office

Office européen des brevets

(11) Publication number: **0 019 340**
**A1**

## (12) EUROPEAN PATENT APPLICATION

(21) Application number: **80200442.4**

(22) Date of filing: **10.05.80**

(51) Int. Cl.³: **F 02 B 51/00**
**C 10 L 1/02**

(30) Priority: **17.05.79 NL 7903875**

(43) Date of publication of application:
**26.11.80 Bulletin 80/24**

(84) Designated Contracting States:
**BE DE FR GB IT NL SE**

(71) Applicant: STAMICARBON B.V.
Postbus 10
NL-6160 MC Geleen(NL)

(72) Inventor: Bruning, Frederik
St. Augustinusstraat 7
NL-6181 GA Elsloo(NL)

(72) Inventor: Hovestreijdt, Gerrit
Bilderdijklaan 1
NL-6165 EA Geleen(NL)

(74) Representative: Van de Panne, Vitus Nicolaas et al,
Octrooibureau DSM Postbus 9
NL-6160.MA Geleen(NL)

(54) Method of operating a Diesel engine using methanol and/or ethanol as the main fuel.

㊺ A compound having a lower auto-ignition temperature or a higher combustion rate than the main fuel is vaporised in the air supplied to the combustion chamber. Suitable additives are e.g. dimethylether and diethylether. The engine can be started and operated without preheating of the intake air and without polluting additives.

EP 0 019 340 A1

Stamicarbon B.V.

0019340

TITLE MODIFIED

see front page

1                                          3097

## METHOD OF OPERATING A DIESEL ENGINE

The invention relates to a method of operating a diesel engine using a fuel consisting wholly or largely of methanol and/or ethanol.

It is known that the use of methanol and ethanol as diesel engine fuels meets with problems caused by the low cetane number of these fuels. These alcohols are too difficult to ignite. A number of solutions to this problem have been proposed. It is possible to preheat the intake air to a temperature of 100-150 °C, which, however, necessitates modification of the engine design. It is also possible to add alkylnitrates to the fuel. This causes very severe corrosion and raises the $NO_x$ emission. The use of other additives to the fuel, for instance the polyethyleneglycols mentioned in Netherlands Patent Application No. 7713095, can mitigate the problem. However, large amounts of such additives are needed to enable the preheating of the intake air to be omitted altogether.

The invention aims at providing an improved method of operating diesel engines on a fuel consisting wholly or largely of methanol and/or ethanol. More in particular it aims at providing a method requiring only a small modification of the engine system. According to the invention this object is reached by adding to the air supplied to the combustion chamber(s) one or more organic compounds possessing a lower auto-ignition temperture and/or a higher combustion rate than the fuel applied, in an amount sufficient to warrant ignition of the fuel.

In this way a diesel engine can be operated without preheating of the intake air. Modifications to the ignition and combustion system are not needed. The addition to the intake air can be realized with simple and reliable equipment that is commercially available. The low air pollution inherent in the use of alcohol as a fuel is retained.

The fuel to be used consists to at least 50 % by weight, preferably to at least 70 % by weight, of methanol, ethanol, or a mixture thereof. There is no objection to the use of a fuel wholly consisting of methanol and/or ethanol. Which alcohol will be used can be determined on the basis of availability. As usual, the fuel may contain additives such as corrosion inhibitors, lubricants, stabilizers, colourants, etc.

Suitable compounds for use according to the invention are such as possess a low boiling point and a lower auto-ignition temperature than (m)ethanol and/or a higher combustion rate than (m)ethanol. Preferably use is made of compounds containing no other elements than carbon, hydrogen and oxygen. Mention may be made of dimethylether, methoxymethanol, ethoxymethanol, methylethylether, diethylether, methylpropylether, dimethoxymethane, and mixtures of two or more of these compounds. The quantity to be used depends on the type of fuel employed and on the preheating of the intake air that may be applied; it may, in general, be such that the intake air contains between 0.1 and 7.0 % by volume of the compound in vapour form. In general, the use of amounts between 1.0 and 4.0 % by volume already allows of using a fuel without special additives and of omitting preheating of the intake air.

The compound or mixture of compounds can be introduced into the intake air by means of an atomizer or vaporizer known in itself.

The invention will be explained in the following example, without being restricted to the mode of realization described therein.

Example

A series-produced passenger car equipped with a diesel engine (Mercedes 200 D) was adapted to the use of the invention. To this end a venturi-type evaporator from a standard LPG evaporating system, connected to a storage vessel for the additive, was incorporated in the conduit for the intake air. The additive used was methoxymethanol, and the fuel methanol containing 1 % by weight of castor oil by way of lubricant. The car was placed on a rolling road. The temperature of the ambient air was about 18 °C. It proved possible to start the engine and have it run under all loads and at all speeds when quantities of methoxymethanol corresponding to between 2 and 5 % vol. of gaseous additive were injected into the intake air. In a standard test with simulation of different engine loads ('Europe test') the performance was found to be virtually equal to those of the same car ran on the usual diesel engine fuel, relative to the calorific value of methanol as compared with that of diesel engine fuel. Analogous results can be obtained with the use of diethylether as additive.

0019340

WHAT IS CLAIMED IS:

1. Method of operating a diesel engine using a fuel consisting wholly or largely of methanol and/or ethanol, characterized in that to the air supplied to the combustion chamber(s) there is added one or more organic compounds possessing a lower auto-ignition temperature and/or a higher combustion rate than the fuel applied, in an amount sufficient to warrant ignition of the fuel.

2. Method according to claim 1, characterized in that the addition to the air consists of one or more compounds containing no other elements than carbon, hydrogen and oxygen.

3. Method according to claims 1-2, characterized in that such a quantity of the compound(s) is used that the air supplied contains between 0.1 and 7 % by volume of the vapourous compound(s).

4. Method according to claims 1-3, characterized in that such a quantity of the compound(s) is used that the air supplied contains between 1 and 4 % by volume of the vapourous compound(s).

5. Method according to claims 1-4, characterized in that use is made of one or more compounds from the group formed by dimethylether, methylethylether, methylpropylether, methoxymethanol, dimethoxymethane, and diethylether.

6. Method according to the invention as described in the specification and explained in the example.

7. Diesel engine equipped for the addition of one or more organic compounds to the air to be supplied to the combustion chamber(s), as required for the realization of the method according to one or more of the claims 1-6.

### European Patent Office

### EUROPEAN SEARCH REPORT

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| A | <u>DE - A - 2 749 806</u> (P & O ENERGY)<br>  * Claims 1,7; page 5, first and last paragraph; page 6, paragraph 1; page 8, paragraph 3; page 10, the first 8 lines of paragraph 3; page 11, paragraph 1; page 12, paragraph 3 *<br>-- | 1 | F 02 B 51/00<br>C 10 L 1/02 |
| A | <u>GB - A - 699 512</u> (POPPE)<br>  * Page 1, lines 10-52 *<br>-- | 1 | |
| A | <u>FR - A - 985 601</u> (LEDORAY)<br>  * Page 1, left-hand column, lines 1-4; 10-17; 39-40; right-hand column, lines 1-7; abstract, paragraphs 1,2 *<br>-- | 1 | F 02 B<br>C 10 L |
| A | AUTOMOBILTECHNISCHE ZEITSCHRIFT, vol. 65, no. 1, January 1963, pages 16-24<br>Stuttgart, DE.<br>E. MÜHLBERG: "MAN-M-Vielstoffmotor mit partieller Abgasrückführung für Alkoholbetrieb"<br>  * Page 18, left-hand column, lines 1-8; right-hand column, paragraph 3, lines 8-17; page 19, left-hand column, top of paragraph 2 of paragraph B; page 20, left-hand column, lines 1-8 of paragraph B *<br>-- | 1 | |
| A | <u>US - A - 3 697 240</u> (YOKOSUKA)<br>  * Abstract; column 4, lines 38-48 *<br>-- | 5,7 | |

TECHNICAL FIELDS SEARCHED (Int.Cl. 3)

./.

The present search report has been drawn up for all claims

| Place of search | Date of completion of the search | Examiner |
|---|---|---|
| The Hague | 01-08-1980 | JORIS |

EPO Form 1503

| | **DOCUMENTS CONSIDERED TO BE RELEVANT** | | | CLASSIFICATION OF THE APPLICATION (Int. Cl. ³) |
|---|---|---|---|---|
| Category | Citation of document with indication, where appropriate, of relevant passages | | Relevant to claim | |
| A | <u>GB - A - 366 947</u> (HELMORE) <br> * Page 2, lines 46-51; 62-71 * <br><br> -- | | 1 | |
| A | <u>FR - A - 1 015 588</u> (FRISCH) <br> * Page 1, left-hand column, paragraphs 1,2,4; page 2, left-hand column, paragraph 5 * <br><br> -- | | 1 | |
| D,A | <u>NL - A - 77 13095</u> (BEROL KEMI) <br> * Page 1, lines 1-4, 31-37; page 2, lines 12-21; page 4, lines 27-30 * <br> & FR - A - 2 372 224 <br><br> -- | | 1 | TECHNICAL FIELDS SEARCHED (Int. Cl. ³) |
| A | <u>FR - A - 1 190 726</u> (PORTES) <br> * Page 1, left-hand column, paragraphs 1,3 * <br><br> ---- | | 1 | |